(19) Europäisches Patentamt
European Patent Office
Office européen des brevets

(11) Veröffentlichungsnummer : **0 108 950**
**B1**

(12) **EUROPÄISCHE PATENTSCHRIFT**

(45) Veröffentlichungstag der Patentschrift :
04.03.87

(51) Int. Cl.⁴ : **G 01 P   3/481**

(21) Anmeldenummer : 83110406.2

(22) Anmeldetag : 19.10.83

(54) Vorrichtung zur Erfassung der Drehzahl eines rotierenden Teils.

(30) Priorität : 13.11.82 DE 3242108

(43) Veröffentlichungstag der Anmeldung :
23.05.84 Patentblatt 84/21

(45) Bekanntmachung des Hinweises auf die Patenterteilung : 04.03.87 Patentblatt 87/10

(84) Benannte Vertragsstaaten :
DE FR GB

(56) Entgegenhaltungen :
DE-A- 1 548 750
FR-A-   514 319
GB-A- 1 581 418
US-A- 3 505 595
US-A- 3 812 429
IBM TECHNICAL DISCLOSURE BULLETIN, Band 9,
Nr. 7, Dezember 1966, Seiten 762-763, New York, USA
R.C. BRADFORD et al.: "Flux sensing system with a
high flux density timing disk"

(73) Patentinhaber : ROBERT BOSCH GMBH
Postfach 50
D-7000 Stuttgart 1 (DE)

(72) Erfinder : Hechtel, Hansjörg
Buchenstrasse 4
D-7251 Weissach (DE)
Erfinder : Dobler, Klaus, Dr.
Bettäckerstrasse 12
D-7016 Gerlingen (DE)

EP 0 108 950 B1

## Beschreibung

Die Erfindung geht aus von einer Vorrichtung zur Erfassung der Drehzahl eines rotierenden Teils nach der Gattung des Hauptanspruchs.

Aus der US-A-3 505 595 ist bereits eine Vorrichtung zur Drehzahlerfassung bekannt, die auf dem Induktionsprinzip beruht. Hierbei ist in der Nähe eines Sensorrades eine mit hochfrequentem Wechselstrom erregte Spule angeordnet, die mit einem parallel dazu angeordneten Kondensator einen Parallelschwingkreis bildet. Das Sensorrad besitzt eine Markierung aus einem magnetisierten und einem nichtmagnetisierten Bereich eines Materials hoher Koerzitivkraft. Durch eine Drehung des Sensorrades wird in der Spule eine Spannung induziert, die zu einer Phasenverschiebung des an der Spule anliegenden hochfrequenten Wechselspannungssignals führt. Weiterhin ist als Auswerteschaltung ein Phasendiskriminator vorgesehen, der mit Hilfe einer inneren Schaltschwelle ein digitales Signal liefert.

Aus der DE-A-1 548 750 ist ebenfalls eine Vorrichtung zur Drehzahlerfassung bekannt. Als Meßsignal dient das Ausgangssignal eines schaltbaren Oszillators. Der Oszillator weist zwei getrennte Induktivitäten auf, in deren gemeinsamem Koppelfeld ein Sensorrad mit eingebautem Koppel- und Dämpfungselement eingebracht ist. Bei Drehung des Sensorrades (Abtastorgans) wird der Oszillator also ein- und ausgeschaltet. Auf dem Abtastorgan sind drei Zonen, z. B. als einschaltende Zone ein Ferritkörper, als haltende Zone ein Lüftspalt und als ausschaltende Zone eine Dämpfungsscheibe aus einem elektrischen Leiter, oder z. B. als ein oder mehrere Ferritkörper gebildet.

Aus der GB-A-1 591 418 ist eine Vorrichtung zur Drehzahlerfassung nach dem Induktionsprinzip bekannt. Als Markierungen eines rotierenden Teils sind einzelne Dauermagnete vorgesehen, die auf einem elastischen Band in gleichen Abständen angebracht sind. Das elastische Band selbst wird über das rotierende Teil, etwa eine Welle, gezogen, so daß die Magnete auf dem rotierenden Teil einen gleichförmigen Abstand zueinander einnehmen.

Weiterhin ist eine Vorrichtung zur Drehzahlerfassung bekannt, bei der das Meßrad als Zahnscheibe ausgebildet ist. Die zur Erzeugung des Meßsignals dienenden Markierungen werden hierbei durch die Zähne und Zahnlücken der Zahnscheibe gebildet, die aus einheitlichem, entweder ferromagnetischem oder nicht ferromagnetischem (dia- oder paramagnetischem), jedoch elektrisch leitfähigem Material besteht. Je nachdem, welches Material verwendet wird, wird bei der Messung entweder der magnetostatische Effekt und der Wirbelstromeffekt oder der Wirbelstromeffekt allein ausgenutzt. Da beide Effekte mit zunehmendem Abstand zwischen Spule und Zahnscheibe abnehmen, wird bei dieser bekannten Vorrichtung neben der Zähnezahl auch die nicht kreisförmige Zahnscheiben-Drehung erfaßt, die beispielsweise durch Lagerspiel, Wellendurchbiegung oder nicht senkrechte Montage der Zahnscheibe zu der sie tragenden Welle verursacht wird. Man gewinnt so an der Spule ein Meßsignal, bei dem die Zähnezahl der ersten Ordnung der Drehzahl überlagert ist. Dieses Signal ist beim Vorhandensein einer nicht kreisförmigen Zahnscheiben-Drehung zur Weiterverarbeitung für eine Impulsgewinnung ungeeignet, da in diesem Falle die bei einer bestimmten Schwellspannung ansprechende Auswerteschaltung nicht alle Zähne erfaßt.

### Vorteile der Erfindung

Die erfindungsgemäße Vorrichtung mit den kennzeichnenden Merkmalen des Hauptanspruchs hat demgegenüber den Vorteil, daß das an der Spule auftretende Meßsignal selbst beim Vorhandensein einer nicht kreisförmigen Meßraddrehung sich so darstellt, daß am Ausgang der Auswerteschaltung eine Impulsfolge geliefert wird, deren Folgefrequenz exakt der Folgefrequenz der Markierungen entspricht. Durch die erfindungsgemäße Vorrichtung werden also unabhängig von der nicht kreisförmigen Meßraddrehung alle Markierungen des Meßrades erfaßt. Weitere Vorteile ergeben sich aus den Unteransprüchen.

### Zeichnung

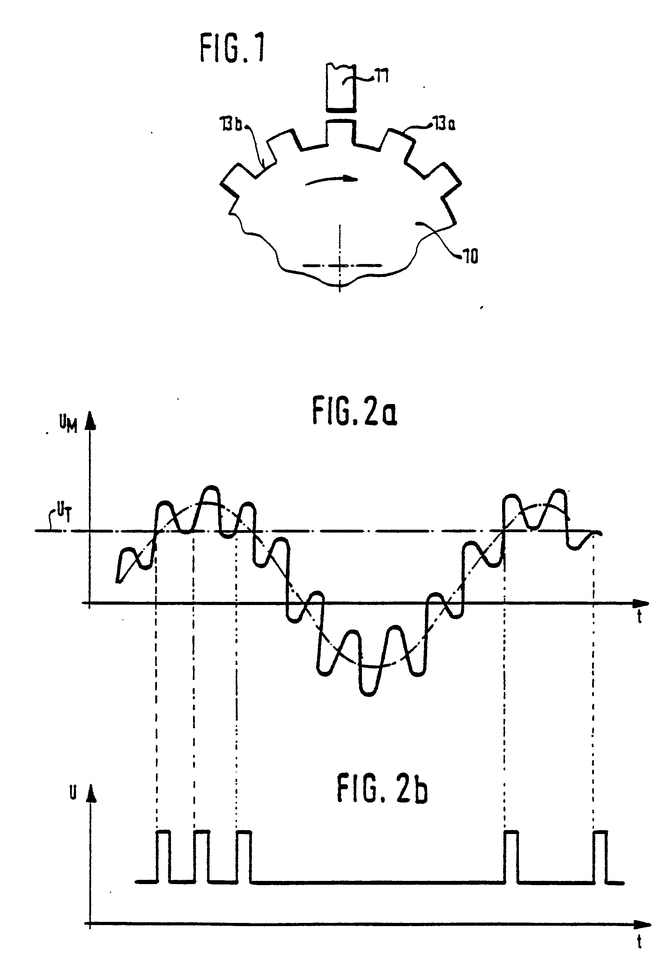

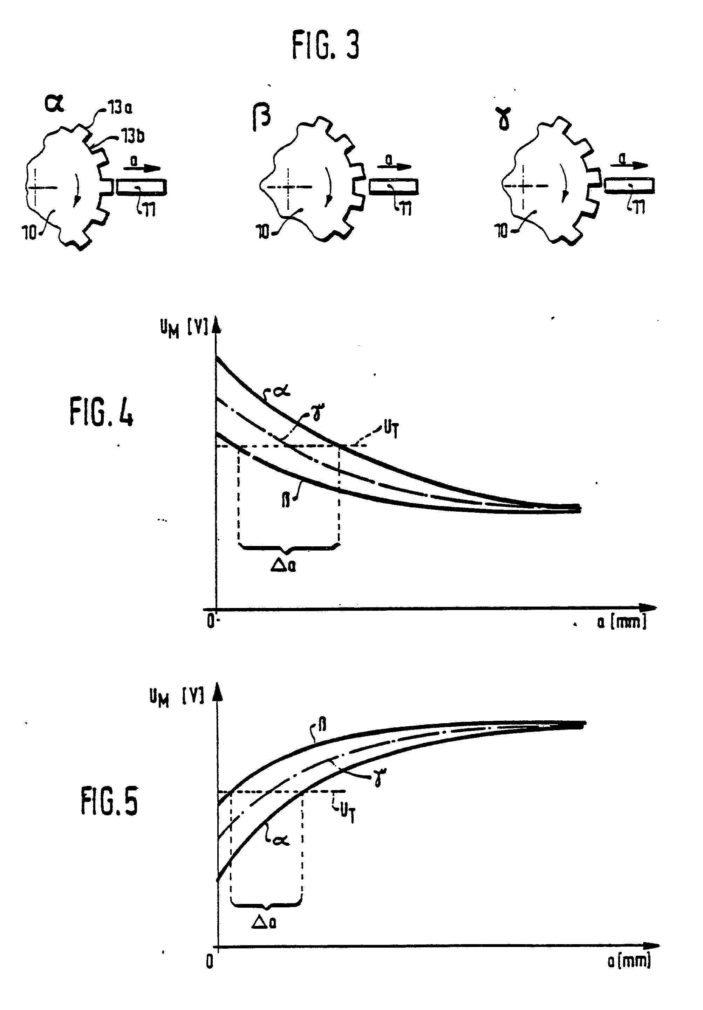

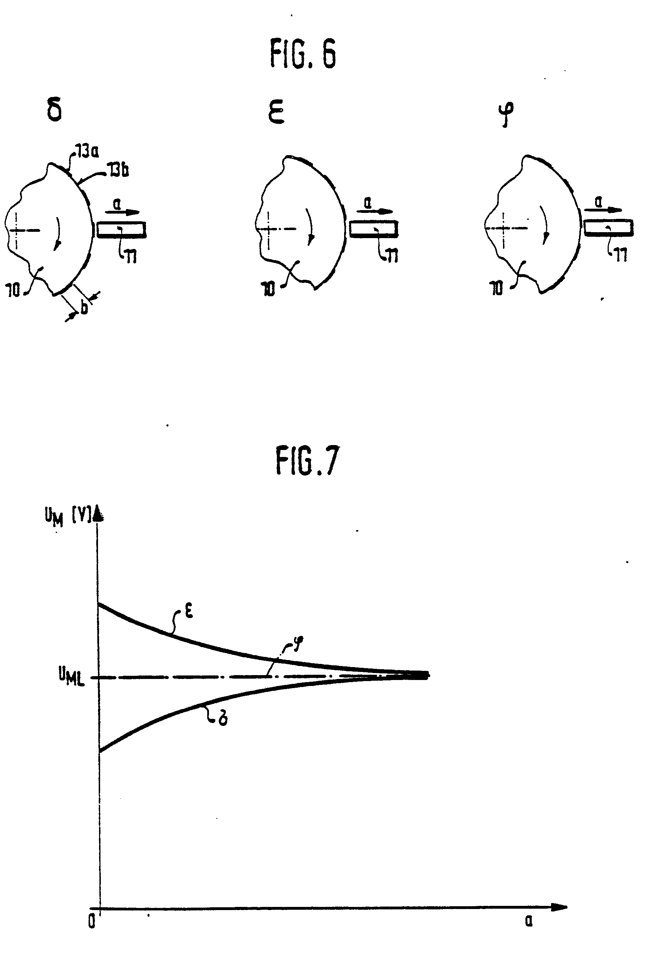

Anhand der Zeichnung wird die Erfindung näher erläutert. Es zeigen : Figur 1 eine bekannte Vorrichtung zur Drehzahlerfassung, die aus einer Zahnscheibe und einer Spule besteht, Figur 2a das bei einer Vorrichtung nach Figur 1 von der Spule beim Vorhandensein einer nichtkreisförmigen Zahnscheiben-Drehung abgegebene Meßsignal $U_M$ in Abhängigkeit von der Zeit t, Figur 2b die von einem der Spule nachgeschalteten Schmitt-Trigger im Falle eines Meßsignals nach Figur 2a abgegebene Impulsfolge, Figur 3 die Vorrichtung nach Figur 1 bei drei verschiedenen, zur Aufnahme der Meßspannungskennlinien dienenden Stellungen der Zahnscheibe relativ zur Spule, Figur 4 die in den drei Stellungen nach Figur 3 von der Spule abgegebene Meßspannung in Abhängigkeit vom Abstand zwischen Spule und Meßrad für den Fall, daß das Material der Zahnscheibe und die Frequenz des Wechselstroms so gewählt sind, daß das Meßsignal nur einen kleinen Wirbelstromanteil aufweist (vorzugsweise induktives Meßverfahren), Figur 7 die in den drei Stellungen nach Figur 3 von der Spule abgegebene Meßspannung in Abhängigkeit vom Abstand zwischen Spule und Meßrad für den Fall, daß das Material der Zahnscheibe so gewählt ist, daß das Meßsignal keinen induktiven Anteil aufweist (reines Wirbelstrommeßverfahren), Figur 6 ein

2

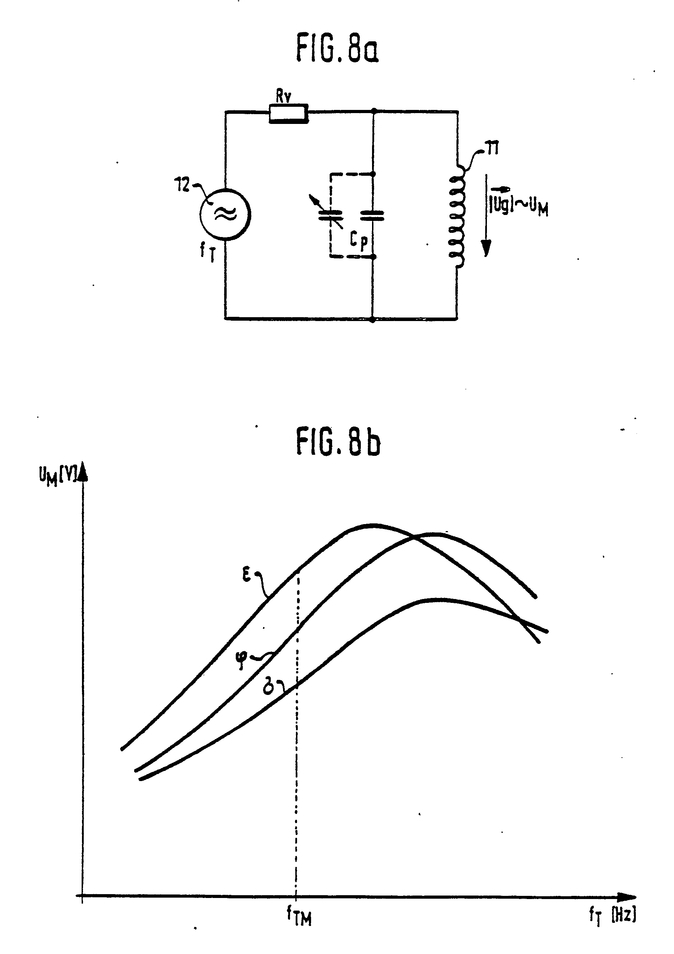

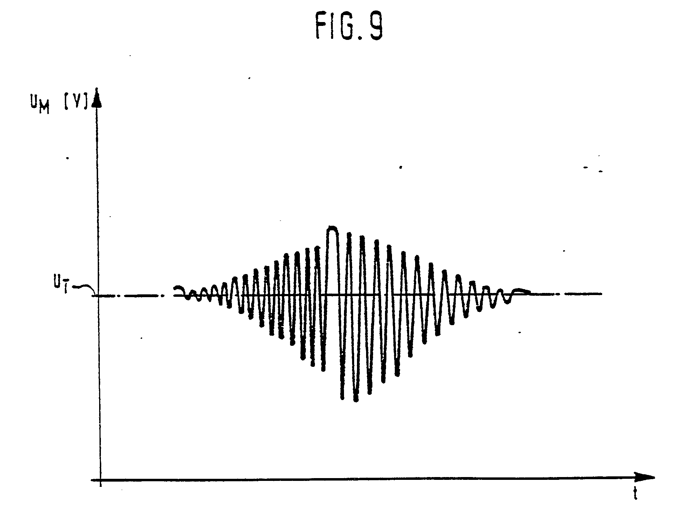

Ausführungsbeispiel einer erfindungsgemäßen Vorrichtung bei drei verschiedenen, zur Aufnahme der Meßspannungskennlinien dienenden Stellungen des Meßrades relativ zur Spule, Figur 7 die in den drei Stellungen nach Figur 6 von der Spule abgegebene Meßspannung in Abhängigkeit vom Abstand zwischen Spule und Meßrad, Figur 8a ein Ausführungsbeispiel für die elektrische Beschaltung der Sensorspule ohne Auswerteschaltung, Figur 8b die Meßspannung der erfindungsgemäßen Anordnung in Abhängigkeit von der Frequenz des Wechselstroms bei einem bestimmten Abstand zwischen Spule und Meßrad, insbesondere unter Hinzuschaltung einer Kapazität parallel zur Sensorspule, Figur 9 die unverstärkte Meßspannung $U_M$ für den Fall, daß das Meßrad stark exzentrisch aufsgespannt ist, in Abhängigkeit von der Zeit t.

Beschreibung der Erfindung

Für die Steuerung und Regelung von Maschinen werden in zunehmendem Maße Sensoren benötigt, die zur Erfassung von Drehzahlen oder Positionen geeignet sind. Dabei werden häufig bei rotierenden Maschinen verzahnte Scheibenräder (Meßrad) 10 mit geeigneten Gebern 11 zur Impulsgewinnung verwendet. Bei den bekannten berührungsfreien (passiven) Meßverfahren nützt man den unterschiedlichen Abstand a zwischen Zahn und Zahnlücke zum Geber 11 als Meßeffekt aus (Figuren 1 und 3).

Da es sich dabei primär um ein Abstandsmeßverfahren handelt, wird neben der Zähnezahl auch die nicht kreisförmige Zahnscheiben-Drehung erfaßt, verursacht beispielsweise durch Lagerspiel, Wellendurchbiegung oder nicht senkrechte Montage des Zahnrades zur Welle. Man gewinnt somit ein Meßsignal (Meßspannung), bei dem die Zähnezahl der ersten Ordnung der Drehzahl überlagert ist (Figur 2a). Dieses Signal ist zur Weiterverarbeitung für eine Impulsgewinnung ungeeignet, da die nachfolgende Auswerteschaltung, die beispielsweise einen Schmitt-Trigger enthält, nicht alle Zähne erfaßt, wie Figur 2b zeigt.

Die weiter unten beschriebene erfindungsgemäße Vorrichtung ermöglicht eine so große Unterdrückung der ersten Ordnung in der Meßwertanzeige, daß sämtliche Zähne von der Auswerteschaltung registriert werden.

Bei den bekannten berührungsfreien elektrischen Induktiv- oder Wirbelstrommeßverfahren durchfließt ein von einem Generator 12 erzeugter Wechselstrom mit der Trägerfrequenz $f_T$ eine Sensorspule 11 (Figur 8a). Da der dort auftretende Spannungsabfall $\vec{U_g}$ zur Meßsignalgewinnung ausgenützt wird, bestimmt die Größe des Scheinwiderstandes der Spule 11 die Höhe der Meßspannung $U_M$. Dabei ergeben sich nachstehende Zusammenhänge :

Besteht das Meßobjekt 10 aus ferromagnetischem Material (z. B. St37.11), so bestimmen zwei Effekte die Induktivität der Geberspule 11. Der magnetostatische Effekt bewirkt bei Annäherung des Meßobjekts 10 an die Spule 11 eine Induktivitätserhöhung, der Wirbelstromeffekt dagegen eine Induktivitätsverminderung ; die beiden Effekte wirken also gegensätzlich. Mit steigender Frequenz $f_T$ nimmt bekannterweise der Wirbelstromeffekt zu, während sich die Permeabilität verkleinert. Aus diesem Grunde überwiegt beispielsweise bei ferromagnetischen Stählen (bei relativ niedrigen $f_T$-Frequenzen) der magnetostatische Einfluß deutlich ; die Selbstinduktivität der Spule 11 nimmt deshalb bei Annäherung des Meßobjekts 10 zu. Besteht ein Meßobjekt 10 dagegen aus nicht ferromagnetischen Materialien (beispielsweise Buntmetall), so wirkt nur der Wirbelstromeffekt, sofern die Oberflächen dieser Materialien elektrisch leitend sind. Die Selbstinduktivität der Spule 11 nimmt also bei Annäherung ab.

Die nachstehenden Betrachtungen basieren auf der Voraussetzung, daß die Spule 11 so gewickelt ist, daß — bei der verwendeten Trägerfrequenz $f_{TM}$ — die Induktivität der Spule 11 einen dominierenden Einfluß auf deren Gesamt-Scheinwiderstand $\vec{Z_g}$ besitzt ; $\vec{Z_g}$ verändert sich also tendenziell entsprechend der Spuleninduktivität.

Erfolgt die Drehzahlmessung auf bevorzugt induktive Weise — die verzahnte Scheibe 10 besteht aus ferromagnetischem Material, die Frequenz $f_{TM}$ ist relativ niedrig —, so ergeben sich die nachstehend beschriebenen Verhältnisse. Dabei ist unterstellt, daß sich der Spulenwiderstand $\vec{Z_g}$ und die Meßspannung $U_M$ gleichsinnig verändern, was bei einer entsprechenden Auslegung der elektrischen Auswerteschaltung der Fall ist.

1. Geber 11 mißt gegen Zahnrücken 13a (Figur 3α).

Entsprechend den oben beschriebenen Zusammenhängen ist die Meßspannung $U_M$, bedingt durch den magnetostatischen Effekt, beim Abstand 0 mm am größten. Dies ist aus dem Diagramm der Figur 4 erkenntlich. Über dem Abstand a zwischen Geber und Meßobjekt ist dort die Meßspannung $U_M$ (α-Kurve) aufgetragen, beginnend von der Entfernung 0 mm (linkes Diagramm-Ende). Deutlich ist ersichtlich, daß mit zunehmender Distanz a die Meßspannung $U_M$ kleiner wird, um sich bei einem genügend großen Abstand a einem konstanten Wert anzunähern (der Sensor 11 mißt dann gegen « Luft », die wirksame Permeabilität ändert sich nicht mehr).

2. Geber 11 mißt gegen Zahnlücke 13b (Figur 3β).

Im nicht realisierbaren Idealfall extrem weiter Verzahnung würde die Meßspannung $U_M$ über dem

gesamten Bereich des Abstandes a jeweils immer denselben konstanten Wert einnehmen, da der Geber 11 sowohl beim Abstand a = 0 mm, bezogen auf den Zahnrücken (Geber 11 mißt gegen Zahnlücke), als auch bei größerer Distanz a immer gegen Luft mißt. Dies ist jedoch häufig nicht der Fall. Je enger die Verzahnung ist (bezogen auf den Sensorspulen-Durchmesser), desto mehr erfassen bei der Entfernung 0 mm die von der Spule 11 ausgehenden elektromagnetischen Wechselfelder auch den Zahnrücken, die Zahnflanken und/oder den Zahnlückengrund. Die wirksame Permeabilität ist zwar dann geringer als im Fall $\alpha$, jedoch größer, als wenn die Spule 11 lediglich gegen « Luft » messen würde : Die Kennlinie $\beta$ verläuft zwar etwas flacher als die $\alpha$-Kurve, weist jedoch dieselbe Charakteristik auf.

3. Geber 11 mißt gegen Zahnrücken 13a und Zahnlücke 13b (Figur 3$\gamma$).

Steht der Sensor 11 zwischen Zahnrücken und Zahnlücke, so ergibt sich eine Kennlinie, die tendenziell die gleiche Charakteristik aufweist ($\gamma$-Kurve), deren Höhe jedoch zwischen den oben beschriebenen $\alpha$- und $\beta$-Kennlinien verläuft.

Bei der Wirbelstrom-Messung verringert sich — bei derselben, o. a. Trägerfrequenz $f_{TM}$ — bei Annäherung zwischen Geber und Meßobjekt die Spuleninduktivität und damit deren Scheinwiderstand. Aus diesem Grunde verlaufen bei dieser Meßmethode die Meßspannungskennlinien (Figur 5) entgegengesetzt : Die Meßspannungen erhöhen sich mit größer werdendem Abstand a. Dabei ergeben sich, allerdings unter umgekehrten Vorzeichen, ähnliche Meßwertänderungen wie beim induktiven Meßverfahren : Je mehr der Sensor 11 beim Abstand a = 0 mm Wirbelstrom erzeugt, desto stärker ist der Spannungszuwachs mit größer werdender Distanz a, um bei einem genügend weiten Abstand a einen konstanten Wert einzunehmen (Luftspulen-Spannungsabfall). Dies ist aus einem Vergleich der $\alpha$-, $\beta$-, $\gamma$-Kennlinien (Figur 5) mit den entsprechenden Geber-Zahnradpositionen (Figur 3$\alpha$ bis 3$\gamma$) erkennbar.

Verändert sich beispielsweise infolge Unrundheit der Zahnscheibe 10, schlechter Lagerung oder Wellendurchbiegung der Abstand a während einer Umdrehung, so sind beide Meßverfahren zur Drehzahlerfassung ungeeignet, da die konstante Trigger-Spannung $U_T$ des nachgeschalteten Schmitt-Triggers dann nicht alle Zähne erfassen kann. Dies ist aus den Figuren 4 und 5 erkennbar. Bei einer jeweils vorgegebenen konstanten Trigger-Spannung $U_T$ bestimmter Höhe (gepunktete Linien) werden sowohl beim induktiven als auch beim Wirbelstrom-Meßverfahren nur dann sämtliche Zähne gemessen, wenn die Abstandsänderung sich jeweils innerhalb des eingezeichneten Bereiches $\Delta a$ vollzieht. Fällt die Abstandsänderung größer aus, so werden nicht mehr alle Zähne erfaßt.

Die nachstehend beschriebene Erfindung besteht nun darin, das Meßrad 10 aus mindestens zwei verschiedenen Materialien herzustellen und die zu ermittelnde Drehzahl mit demselben Geber 11 gleichzeitig mit dem induktiven und dem Wirbelstrom-Meßverfahren zu messen und dabei die gegensätzlichen Eichkurven so zu verknüpfen, daß von der Trigger-Spannung $U_T$ — unabhängig von der Exzentrizität — die Meßradrotation korrekt erfaßt werden kann. Das Prinzip ist auf den Bildern 6$\delta$ bis 6$\varphi$ ersichtlich. Beim Meßrad 10 übernehmen metallische Folien oder Flächen 13a, die segmentartig gleichmäßig aufgebracht werden, die Funktion der Zähne, während die verbleibenden, unbedeckten Teile 13b des Meßradkörpers die Funktion der Zahnlücken übernehmen (oder umgekehrt). Dabei ist es entscheidend, daß die magnetischen Eigenschaften von Folienmaterial und Meßradkörper unterschiedlich sind. Einen guten Meßeffekt erhält man, wenn, wie hier beschrieben, beispielsweise die Folien 13a aus gut leitfähigem, nicht ferromagnetischem Buntmetall (beispielsweise Kupfer) bestehen, während der Meßradkörper aus ferromagnetischem, hochpermeablem Stoff (beispielsweise magnetischem Ferrit) hergestellt wird.

Steht der Sensor 11 der Folie 13a gegenüber (Position $\delta$ in Figur 6), so arbeitet der Sensor 11 vorzugsweise nach dem Wirbelstromprinzip, d. h. die Meßspannung $U_M$ erhöht sich mit größer werdendem Abstand a ($\delta$-Kurve, Figur 7). In der Position $\varepsilon$ in Figur 6 mißt der Sensor 11 vorzugsweise gegen ferromagnetisches Material 13b. Jetzt erfaßt der Geber 11 den Abstand Geber-Rad vorzugsweise auf induktive Weise. Das bedeutet, daß die Meßspannung $U_M$ sich mit größer werdender Distanz a verringert ($\varepsilon$-Kurve). In der Position $\varphi$ in Figur 6 mißt die Sensorspule 11 ungefähr jeweils hälftig gegen den magnetischen bzw. nichtmagnetischen Bereich. Beim Vergrößern oder Verkleinern des Abstandes a heben sich in diesem Fall die jeweils in ihrer Spulenhälfte gegensätzlich wirkenden Spannungsänderungen in etwa auf. Man erhält (im Idealfall) eine Meßspannung $U_{ML}$, deren Höhe, unabhängig vom Abstand a, nahezu konstant ist.

Aus den beschriebenen Kurvenverläufen ist erkennbar, daß eine konstante Trigger-Spannung $U_T$, die ungefähr so hoch ist wie $U_{ML}$, unabhängig von der Rotationsexzentrizität bei einer Drehzahlmessung sämtliche Foliensegmente 13a und unbedeckten Teile 13b erfaßt. Einen Eindruck von der Leistungsfähigkeit dieses Meßverfahrens vermittelt Figur 9. Dort ist die unverstärkte Meßspannung aufgezeichnet, die man erhält, wenn das Meßrad 10 stark exzentrisch aufgespannt wird (Exzentrizität 0,6 mm). Die Folie 13a hat eine Breite b von 0,5 bzw. 0,8 mm (Figur 6), das Tastverhältnis ist 1 : 1, der Sensorspulen-Durchmesser beträgt 1,4 mm. Deutlich erkennt man, daß es möglich ist, mit einer konstanten Trigger-Spannung $U_T$ bis zur Auflösungsgrenze sämtliche Foliensegmente 13a und unbedeckten Teile 13b zu erfassen, unabhängig vom Abstand a.

Voraussetzung für das einwandfreie Funktionieren dieses Meßsystems ist, daß die $\varepsilon$ (« induktive ») — und $\delta$ (« Wirbelstrom ») — Kennlinien (Figur 7) zumindest gegensätzlich, am besten in grober Annäherung symmetrieähnlich verlaufen. Dies kann man erfindungsgemäß durch Abgleich der Frequenz $f_T$ des Wechselstroms (Trägerfrequenz), der die Spule 11 durchfließt, erreichen. Weiter oben wurde dargestellt, daß sich mit steigender Trägerfrequenz bei magnetischen Stoffen der induktive Effekt abschwächt, während gleichzeitig der Wirbelstromeffekt sowohl bei magnetischen als auch nichtmagnetischen Materialien zunimmt. Es ist also erforderlich, die Trägerfrequenz $f_T$ so lange zu verändern, bis sich die oben beschriebenen Verhältnisse einstellen. Dabei ist es oftmals zweckmäßig, den Spannungsabfall der Luftspule $U_{ML}$ (Abstand Sensor-Meßrad ist sehr groß) als Bezugsgröße für die Triggerspannungshöhe zu wählen ($U_{ML} \approx U_T$).

Es wäre häufig erforderlich, kleine Sensorspulen 11 mit sehr hochfrequentem Wechselstrom zu betreiben, um einen ausreichenden Spannungsabfall zu erzielen.

Durch Anbringung einer Kapazität $C_p$ parallel zum Geber 11 (Figur 8a), die vom Geberanschlußkabel und/oder einem Kondensator herrühren kann, ist es jedoch möglich, die Trägerfrequenz $f_{TM}$ herabzusetzen. Im Diagramm der Figur 8b ist der charakteristische Verlauf der Meßspannung $U_M$ über der Trägerfrequenz $f_T$ (bei einem konstanten Grundabstand zwischen Geber und Rad) aufgetragen ($\delta$, $\varepsilon$, $\varphi$ beschreiben die Position des Sensors 11 zum Rad 10 entsprechend den Figuren 6$\delta$ bis 6$\varphi$).

Deutlich erkennt man, daß in diesem Fall durch Variieren der Trägerfrequenz $f_T$ der Anteil des Wirbelstrom- und induktiven Meßeffekts am Meßsignal $U_M$ so beeinflußt werden kann, daß sich die oben beschriebenen optimalen Verhältnisse einstellen ($f_{TM}$ gepunktete Linie).

Oftmals ist jedoch aus Kostengründen ein Oszillator vorhanden, der lediglich eine fest eingestellte Trägerfrequenz $f_T$ erzeugt (beispielsweise 2 MHz). Dann ist es erfindungsgemäß möglich, durch Verändern von $C_p$ die Resonanzstellen so lange zu verschieben, bis sich auch bei der vorgegebenen Frequenz $F_{TM}$, bezogen auf die Unterdrückung der ersten Ordnung in der Meßwertanzeige, die oben beschriebenen optimalen Verhältnisse einstellen. Dies kann durch einen Drehkondensator geschehen, der entweder einzeln oder zusätzlich zu einem vorhandenen Kondensator parallel zur Spule 11 angebracht wird (punktiert eingezeichnet). Soll die Drehzahlmessung an Serienprodukten erfolgen, so kann man auf Abgleichelemente verzichten, wenn die einzelnen Sensorspulen 11 mit einer solchen Genauigkeit hergestellt werden, daß sie untereinander austauschbar sind.

Wird der Kondensator relativ groß ausgelegt, so ist es möglich, daß eine Erhöhung der Spuleninduktivität eine Absenkung der an der Spule anliegenden Meßspannung ergibt, während eine Induktivitätsverminderung eine Spannungserhöhung bewirkt, da die Trägerfrequenz $f_{TM1}$ dann höher ist als die Resonanzfrequenzen (Fig. 8b). Es kann jedoch auch mit dieser Meßweise die Anzeige der ersten Ordnung unterdrückt werden, da dann lediglich die $\varepsilon$-Kurve und die $\delta$-Kurve spiegelbildlich vertauscht werden (Fig. 7).

Mit der erfindungsgemäßen Vorrichtung wird nicht nur der Fehler, der durch Unrundheit der Meßrad-Rotation hervorgerufen wird, unterdrückt, sondern es werden auch die Meßfehler, die durch radiale Schwingbewegungen des Gebers 11 entstehen könnten, verhindert. Der Geber 11 kann beispielsweise an einem Chassis-Teil montiert sein, das über eine Federung mit der Meßradwelle verbunden ist.

Bei der erfindungsgemäßen Vorrichtung ist es, wie beschrieben, am wirkungsvollsten, das Meßrad 10 segmentartig am Umfang in Zonen 13b ferromagnetischen, Wirbelstrom-Ausbildung behindernden Materials und in Zonen 13a nicht ferromagnetischen, gut leitfähigen, Wirbelstrom-Ausbildung fördernden Materials (beispielsweise Kupfer, Aluminium) zu unterteilen. Es gibt viele Materialien und vielfältige konstruktive Möglichkeiten, diese Bedingungen zu realisieren. Beispielsweise ist es möglich, die Folien 13a aus ferromagnetischem und das Meßrad aus nicht ferromagnetischem Stoff herzustellen. Außerdem ist es beispielsweise denkbar, den Meßradkörper aus Kunststoffen (Resitex, Plexiglas, PVC usw.) herzustellen und die Meßfläche (Umfangsfläche) mit einer metallischen Folie zu bekleben, die ihrerseits — durch Aufbringen eines weiteren Metalls — streifenförmig unterteilt ist, d. h. aus Streifen besteht, die abwechselnd unterschiedliches Material der genannten Art enthalten und auf diese Weise die meßwirksamen Zonen 13a, 13b bilden.

Zur segmentartigen bzw. streifenförmigen Aufbringung eines magnetischen Materials auf nichtmagnetisches Material oder umgekehrt gibt es verschiedene Möglichkeiten wie beispielsweise Aufkleben, Aufdampfen oder elektrochemische Verfahren. Beispielhaft sind noch von der Vielzahl der Materialien einige in einer Tabelle zusammengefaßt, die die geforderten Stoffeigenschaften besitzen.

(Siehe Tabelle 1 Seite 6 f.)

Tabelle 1

| Ferromagnetischer Stoff hoher Permeabilität (teilweise gute Wirbel-strom-Unterdrückung) | Nicht ferromagnetischer Stoff mit guter elektrischer Leitfähigkeit |
|---|---|
| Fe Fe-Si-Legierung Fe-Ni-Legierung Mumetall Ferrite Dynamo-Blech dünner Stärke | Antimagnetischer Stahl Aluminium Kupfer Messing |

Bisher wurde immer davon ausgegangen, daß der Sensorspulendurchmesser d gleich groß oder (noch günstiger) etwas kleiner ist als die Segmentbreite b (Folienbreite b bei ungefährem Tastverhältnis 1 : 1 — Figur 6). Ist jedoch das Meßrad 10 in besonders enge Abschnitte 13a, 13b unterteilt, so ist es meistens unumgänglich, den Durchmesser d der Spule 11 größer auszuführen als die Breite b. In diesem Fall ist es zweckmäßig, den Sensor 11 so zu gestalten, daß dessen Außendurchmesser ungefähr annähernd gleich einem ungeraden Vielfachen der Segmentbreite b ist (Beispiel : b = 0,5 mm, d = 1,5 mm). Der Sensor 11 mißt jetzt über drei Abschnitte, wobei er in den Extrempositionen entweder eine oder zwei Folien überdeckt (analog Figur 6δ, 6ε). Der Geber 11 mißt dann in diesen Positionen nicht mehr nur wirbelstrommäßig bzw. bevorzugt induktiv den Abstand a bzw. die Drehzahl, sondern es dominiert lediglich jeweils der Wirbelstrom- oder induktive Effekt. Prinzipiell gelten dabei dieselben oben beschriebenen Verhältnisse. Bedingt durch die Randzonen des elektromagnetischen Wechselfeldes erfolgt ohnehin nie eine vollständige Trennung der beiden Meßarten. Wird der Sensor 11 partiell durch eine metallische Folie abgedeckt, so gelten sinngemäß dieselben Zusammenhänge.

**Patentansprüche**

1. Vorrichtung zur Erfassung der Drehzahl eines rotierenden Teils
    mit einem Meßrad (10), das getrieblich mit dem rotierenden Teil verbunden ist und an dem sich in Umfangsrichtung periodisch wiederholende Markierungen (13) aus unterschiedlichen Materialien angebracht sind,
    mit einer Spule (11), die in der Nähe des Meßrades angeordnet ist, von einem Wechselstrom bestimmter Frequenz durchflossen ist und ein von der Drehzahl des Meßrades abhängiges Meßsignal abgibt, und
    mit einer Auswerteschaltung, die bei einer bestimmten Schwellspannung auf das Meßsignal anspricht,
dadurch gekennzeichnet,
    daß die Markierungen des Meßrades aus abwechselnd ferro- und nichtferromagnetischem, jedoch elektrisch leitfähigem Material bestehen,
    daß die Schwellspannung ($U_T$) der Auswerteschaltung derjenigen Spannung ($U_{ML}$) entspricht, wenn bei weitem Abstand der Spule vom Meßrad die Auswerteschaltung gerade anspricht,
    daß das ferromagnetische Material so gewählt ist, daß eine Änderung des Meßsignals durch die aus ferromagnetischem Material bestehenden Markierungen durch einen magnetostatischen Effekt bewirkt wird, und
    daß die Frequenz ($f_{TM}$) des Wechselstroms so gewählt ist, daß eine Änderung des Meßsignals durch die aus nichtferromagnetischem Material bestehenden Markierungen durch einen Wirbelstromeffekt bewirkt wird.
    2. Vorrichtung nach Anspruch 1, dadurch gekennzeichnet, daß die Zonen (13a, 13b) unterschiedlichen Materials in Umfangsrichtung des Meßrades (10) jeweils mindestens annähernd gleiche Ausdehnungen haben.
    3. Vorrichtung nach Anspruch 1 oder 2, dadurch gekennzeichnet, daß die Auswerteschaltung einen der Spule (11) nachgeschalteten Schmitt-Trigger enthält.

**Claims**

6

1. Device for detecting the rotational speed of a rotating part

comprising a sensing wheel (10), which is connected by gears to the rotating part and to which markings (13) of different materials, which are periodically repeated in the peripheral direction, are applied,

comprising a coil (11) which is arranged in the vicinity of the sensing wheel, through which a frequency determined by an alternating current flows and which emits a measurement signal which depends on the rotational speed of the sensing wheel, and

comprising an analysing circuit which responds to the measurement signal at a particular threshold voltage,

characterized in

that the markings of the sensing wheel consist of alternately ferro- and non-ferromagnetic but electrically conductive material,

that the threshold voltage ($U_T$) of the analysing circuit corresponds to the voltage ($U_{ML}$) when the analysing circuit just responds when the coil is far distant from the sensing wheel,

that the ferromagnetic material is selected in such a manner that a change in the measurement signal due to the markings consisting of ferromagnetic material is effected by a magnetostatic effect, and

that the frequency ($f_{TM}$) of the alternating current is selected in such a manner that a change of the measurement signal due to the markings consisting of nonferromagnetic material is effected by an eddy-current effect.

2. Device according to Claim 1, characterized in that the zones (13a, 13b) of different material have in each case at least approximately equal extents in the peripheral direction of the sensing wheel (10).

3. Device according to Claim 1 or 2, characterized in that the analysing circuit contains a Schmitt trigger which follows the coil (11) in the circuit.

**Revendications**

1. Dispositif pour déterminer la vitesse de rotation d'une pièce tournante, dispositif comportant :

une roue de mesure (10) qui est reliée à la pièce tournante de façon à être entraînée et sur laquelle sont mis en place des repères (13) en matériaux différents se répétant périodiquement en direction périphérique,

une bobine (11) qui est disposée au voisinage de la roue de mesure, qui est parcourue par un courant alternatif de fréquence déterminée, et qui délivre un signal de mesure dépendant de la vitesse de rotation de la roue de mesure,

un circuit d'exploitation qui réagit au signal de mesure pour une tension de seuil déterminée, dispositif caractérisé en ce que :

les repères de la roue de mesure sont constitués alternativement d'un matériau ferromagnétique et non ferromagnétique, mais cependant électriquement bon conducteur,

la tension de seuil ($U_T$) du circuit d'exploitation correspond à la tension ($U_{ML}$) lorsque, pour une grande distance entre la bobine et la roue de mesure, le circuit d'exploitation réagit franchement,

le matériau ferromagnétique est choisi de façon qu'une modification du signal de mesure par les repères constitués de matériaux ferromagnétiques, soit provoquée par un effet magnéto-statique,

la fréquence ($f_{TM}$) du courant alternatif est choisie de façon qu'une modification du signal de mesure par les repères constitués de matériaux non ferromagnétiques, soit provoquée par un effet de courant de Foucault.

2. Dispositif selon la revendication 1, caractérisé en ce que les zones (13a, 13b) de matériau différent dans la direction périphérique de la roue de mesure (10) aient respectivement au moins approximativement les mêmes étendues.

3. Dispositif selon la revendication 1 ou 2, caractérisé en ce que le circuit d'exploitation comprend un déclencheur de Schmitt branché à la suite de la bobine (11).

FIG.1

FIG.2a

FIG. 2b

FIG. 3

FIG. 4

FIG.5

# FIG. 6

$\delta$  $\epsilon$  $\varphi$

# FIG. 7

# FIG. 8a

# FIG. 8b

# FIG.9